# EUROPEAN PATENT APPLICATION

(11) **EP 3 330 536 A1**
(43) Date of publication of application: **06.06.2018**
(21) Application number: 17196518.9
(22) Date of filing: 16.10.2017
(51) Int. Cl.: F03D 80/60, F03D 1/06

(54) **WIND TURBINE HAVING AT LEAST ONE WIND-COOLED COMPONENT**

(30) Priority: 01.12.2016 DE 102016223982
(71) Applicant: Siemens Wind Power A/S, DK-7330 Brande (DK)
(72) Inventor: Airoldi, Giovanni, 8000 Aarhus (DK); Enevoldsen, Peder Bay, 7100 Vejle (DK)
(74) Representative: Aspacher, Karl-Georg

(57) **Abstract**

Wind turbine (1), comprising a tower (2) carrying a structural unit (3) with
- a hub (7) for mounting blades (8) of the wind turbine (1),
- a nacelle (4), and
- a generator for converting mechanical energy into electrical energy, housed by and/or mounted at least partly to the nacelle (4),
wherein at least one outer component of the generator constitutes a part of an outer surface of the structural unit (3) to be wind-cooled and/or a cooling structure (11) for wind-cooling extends from an outer surface of the nacelle (4), wherein the diameter of the hub (7) at least partly exceeds the radial dimensions of the outer component and/or the nacelle (4) and at least one flow manipulating structure (14) is provided on the structural unit (3) using wind passing between the blades (8) over the hub (7) to increase the wind velocity at the outer component and/or the cooling structure (11).

## Description

The invention concerns a wind turbine, comprising a tower carrying a structural unit with a hub for mounting blades of the wind turbine, a nacelle, and a generator for converting mechanical energy into electrical energy, at least partly housed by and/or mounted to the nacelle, wherein at least one outer component of the generator constitutes a part of an outer surface of the structural unit to be wind-cooled and/or a cooling structure for wind-cooling extends from an outer surface of the nacelle.

Wind turbines usually comprise a structural unit comprising the hub to which the blades of the wind turbine are mounted, the nacelle and a generator. This structural unit is supported rotatably on a tower to be able to adjust to different wind directions. The structural unit can comprise additional components, for example mechanical components, components of a rotation system and/or anemometers.

Such structural units, in particular their nacelles, are carrying energy conversion devices (generator, converter), mechanical components (gearbox), and electrical devices in general, which produce heat losses. The heat losses of these components installed in the structural unit need to be dissipated to the surrounding air. This is achieved directly and/or indirectly. The heat is released directly when the heat is released from a component in direct contact with the cooling air, i.e. constituting at least part of the outer surface of the structural unit (the nacelle itself, the outer rotor or the outer stator of a direct drive turbine as an outer component of the generator). The heat is released indirectly when a cooling system is in place which takes the heat from a component and through a medium and an external cooling structure (also termed cooler) transfers it to the surrounding air.

In direct drive wind turbines featuring permanent magnet generators, the outer rotor as outer component of the generator carries magnets, which need to be kept below a required temperature for two reasons: a) the lower the magnet temperature is, the higher their performance; and b) in case a short circuit occurs, if the magnet temperature is above a critical value, the magnets would partially or even completely demagnetise. The magnets are heated by radiation from the stator of the generator and by the air circulated to cool the stator, where most of the heat losses are released. The magnets are installed inside the rotor, cooled by the external air which flows on the rotor surface and conveys the heat to the environment. Having a high velocity on the rotor surface, the convective heat exchange to the ambient air is improved. Therefore it is crucial to guarantee an appropriate supply of cooling air on the outer surface of the rotor to allow an effective cooling of the magnets.

Furthermore, in recently developed wind turbines the hub has grown in size, in particular having a diameter larger than that of the hub and/or the radial dimensions of the nacelle. This causes a disturbed flow downstream the hub, and as a consequence, low velocities and low convective heat exchanges on the generator rotor surface and or at cooling structures mounted on or formed by the nacelle.

When a nacelle comprises a cooling structure for cooling of the wind turbine components (generator, converter, other electrical components, etc), such a cooler would be subject to a low air velocity due to the disturbed flow. This reduces the performance of the cooling structure and its capacity to dissipate heat. The size of such cooling structures is often constrained due to various reasons, for example transportation or presence of a helihoist platform as part of the wind turbine. In particular, when a helihoist platform is installed, the size of the cooling structure cannot exceed a certain height. If the air flow is disturbed, the wind velocity at the cooling structure may not be high enough to provide sufficient cooling.

It is an object of the current invention to provide means to enhance wind cooling for outer components of generators or cooling structures of a structural unit of a wind turbine.

This object is achieved by a wind turbine according to claim 1.

According to the invention, a wind turbine comprises a tower carrying a structural unit with a hub for mounting blades of the wind turbine, a nacelle, and a generator for converting mechanical energy into electrical energy, housed by and/or mounted at least partly to the nacelle, wherein at least one outer component of the generator constitutes a part of an outer surface of the structural unit to be wind-cooled and/or a cooling structure for wind-cooling extends from an outer surface of the nacelle, and is characterized in that the diameter of the hub at least partly exceeds the radial dimensions of the outer component and/or the nacelle and at least one air flow manipulating structure is provided on the structural unit using wind passing between the blades over the hub to increase the wind velocity at the outer component and/or the cooling structure.

It is proposed to use flow manipulating structures, which can also be termed aerodynamic appendices or air guidance structures, on the structural unit, preferably the hub. These air flow manipulating structure may, however, also or additionally be provided on the surface of the outer component and/or the nacelle. These air flow manipulating structures serve to energise the air low, i.e. the wind, such that the wind velocity on the outer surface of the outer component and/or along the cooling structure is increased, resulting in an enhanced heat exchange from said outer surface and/or the cooling structure. In other words, aerodynamic appendices are applied to improve the cooling of outer generator components and/or to increase the flow rate over or through cooling structures installed on the nacelle. The cooling structure may at least partly comprise a nacelle housing or be comprised by the nacelle housing.

Higher air flow, i.e. wind velocities, through or on cooling structures and/or outer components of the generator increases the efficiency of the energy conversion devices, allowing higher power to be produced.

Preferably, the outer component is a rotor of the generator rotationally connected to the hub and comprising at least one magnet to be wind-cooled by wind passing over the outer surface of the outer component. Such a wind turbine usually does not comprise a gearbox between hub and rotor and is called direct drive wind turbine. As already described, maintaining the temperature of the magnets at a low level is beneficial, since colder magnets have a higher efficiency. For some operating conditions (typically at high ambient temperature), the magnet temperature is the limiting factor for the generator power. A reduced magnet temperature allows for an increase in power output and thereby of annual energy production.

The at least one air flow manipulating structure may be placed between the blades on the hub. Wind usually flows to the structural unit from a front direction, impinging on the blades to convert wind energy to mechanical energy and rotating the hub. A part of the wind flows through the spaces between the blades, which is therefore the ideal location to place air flow manipulating devices, offering a predictable air flow before too many disturbances occur.

According to the invention, two different kinds of air flow manipulation may be advantageously put into effect, alternatively or using both. One is creating vortices; the other is guiding the air flow.

In a preferred embodiment, at least one of the at least one flow manipulating structure comprises a vortex generator. Vortex generators stir the air flow and can be optimized to have a high wind velocity at cooling surfaces of the outer component and/or the cooling structure, thus enhancing heat exchange. Preferably, these vortex generators can be installed on the hub if a high velocity on the outer component adjacent to the hub is to be achieved or kept, in comparison with structures in which the radial dimensions of the hub and the outer component match.

In a concrete embodiment, the vortex generator comprises two triangular guiding elements, having a maximum height and a length and being arranged symmetrically with respect to a central axis on the outer surface of the structural unit, in particular the hub, their lengthwise edge mounted on the outer surface of the structural unit such that the height increases in a hub-nacelle direction and such that they are oriented oblique to the central axis increasing the distance to the central axis in the hub-nacelle direction, wherein the longitudinal axis of each guiding element and the central axis draw a predetermined angle. The central axis should be at least essentially parallel to an incoming wind velocity direction, which can be estimated well for a wind turbine. The guiding elements are oblique by a predetermined angle which is defined relative to the central axis and thus, when designing the vortex generator, to the incoming air flow velocity. Their height increases in a direction from hub to nacelle, such that the triangular guiding element is mounted on a non-hypotenuse side of the right-angled triangle. A vortex generator constructed in such a manner may be a counter rotating vortex generator.

In preferred embodiments, the predetermined angle is chosen from an interval from 15° to 30° and/or the height is chosen from an interval from 50 mm to 300 mm and/or the ratio of the distance of the guiding elements at their maximum height end and/or the ratio of the length to their maximum height is chosen from an interval between 1 and 3. These values have been found in theoretical calculations, simulations and experiments to provide advantageous air flow manipulating properties for wind turbines of the inventive type.

Further preferably, at least two vortex generators spaced apart a predetermined distance, in particular measured perpendicular to and between their central axes, are provided between two blades. Thus, at least two preferably constructively identical vortex generators may be installed, for example, between blades on a hub to provide maximum flow manipulation efficiency. It has been shown that preferred distances result if the predetermined distance, in particular measured between the central axes, in relation to the maximum height of the vortex generator, in particular of the guiding elements, is chosen from an interval between 3 and 8.

Alternatively or additional to vortex generators, at least one of the at least one flow manipulating structure may comprise a guide vane. Such guide vanes direct the air flow and thus the wind to cooling surfaces of the outer component and/or the cooling structure and are preferably at least provided on the hub, between blades. Particularly when the diameter of the structural unit at the hub is large compared to the diameter or radial dimensions in general of the outer component and/or the nacelle, it has been found that guide vanes are advantageous in generating higher wind velocities at components to be cooled, in particular compared to vortex generators.

Preferably, the guide vane has a guiding surface extending at least partly parallel to the outer surface of the structural unit, in particular the hub, in a hub-nacelle direction. This guiding surface may be curved at its nacelle-side end to direct the air flow to regions of lower radial dimensions. The nacelle-side end of the guiding surface may, if the guide vane is installed on the outer surface of the hub, extend beyond the hub to other parts of the structural unit. It is also possible that the hub surface as such is curved, having a maximum diameter position and continuing to match the outer diameter of an adjacent part, for example a rotor as outer component. In such a case, the guide vane may extend at least from the maximum diameter position to at least close to the longitudinal end of the hub, following at least in essence the curvature of the hub surface in the longitudinal direction of the structural unit.

The guide vane may have a chord length of 1 to 8 m. It is preferred that guide vanes have dimensions which suit turbine blades with a root diameter in the range of 1 to 8 m. Therefore, the chord length if the guide vane should also be included in a range of 1 to 8 m.

It should be noted here that the hub in the sense of the current invention not only comprises the usually cast steel component holding the blade (bearing), but also the so-called spinner, a cover enclosing the component holding the blades and usually made from fiberglass. While it is at least in theory conceivable to also use air flow guiding channels through the hub, this is usually not feasible for structural reasons and, in case of the spinner, this component serving as shelter for technicians working on the blade root.

In an advantageous embodiment, an anemometer is installed on the nacelle in a region having increased wind velocity due to the flow manipulating structures. While according to the state of the art, due to the low velocity region behind the hub, the anemometer monitoring the wind speed would have to be installed at a height which allows the measurement of the free stream air velocity, according to the invention, which maintains a higher velocity closer to the outer component of the generator and/or to the nacelle roof, a more compact installation of the anemometer is possible.

Further advantages and details can be taken from the following description of preferred embodiments in conjunction with the drawings, in which:
- Fig. 1: is a principle drawing of a wind turbine according to the invention,
- Fig. 2: shows a first embodiment of a flow manipulating structure on a structural unit,
- Fig. 3: shows vortex generators on the outer surface of a hub between two blades, and
- Fig. 4: shows a second embodiment of a flow manipulating structure on the structural unit.

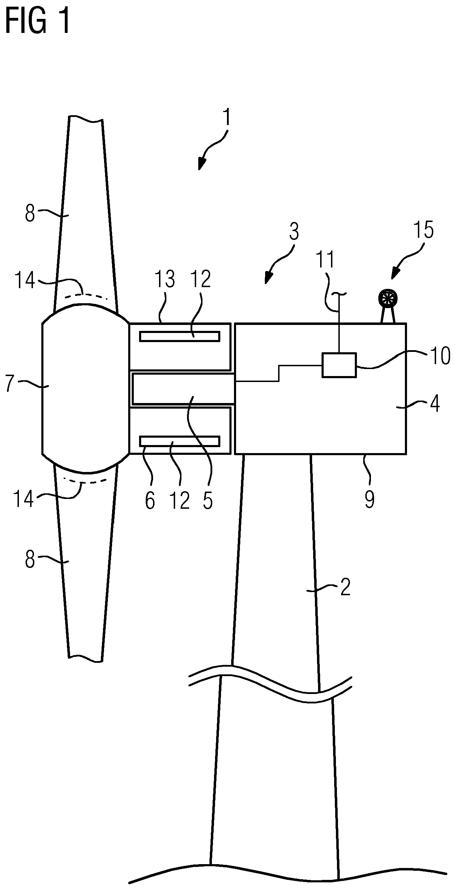

Fig. 1 shows a wind turbine 1 according to the current invention. The wind turbine comprises a tower 2 carrying a structural unit 3, which in turn comprises a nacelle 4, a generator having a stator 5 and an outer rotor 6, and a hub 7 to which blades 8 are mounted. The hub 7 may comprise a cast metal bearing, carrying the blades 8, and a spinner enclosing the bearing and made from fiberglass.

The nacelle 4 comprises a nacelle housing 9. Inside the housing 9, multiple components relating to the energy conversion, rotation of the structural unit 3 to be aligned with the wind as well as other components may be included. Indicated is a cooling system 10 for the stator 5 and/or other electrical components which has a cooling structure 11 on the outer surface of the nacelle 4. The cooling structure 11 uses air flow, i.e. wind, to directly or indirectly cool a cooling medium used in the cooling system 10.

Another wind-cooled component of the wind turbine 1 is the outer rotor 6, which constitutes a part of the outer surface of the structural unit 3 and thus forms an outer component of the generator. The rotor 6 uses permanent magnets 12 to be cooled indirectly by air flow across the outer surface 13 of the rotor 6. As there is no gear box, the wind turbine 1 is a direct drive wind turbine.

The hub 7 has, as already indicated in Fig. 1, a greater maximum diameter than the rotor 6 and the nacelle 4, disturbing the air flow and lowering wind velocities on the outer surface 13 of the rotor 6 and at the cooling structure 11 extending from the nacelle housing 9, compared to a case where the diameters (or in general, radial dimensions with respect to the rotating axis of the hub 7 and rotor 6) match.

To counter this effect and provide high wind velocities on the surface 13 and at the cooling structure 11, air flow manipulating structures indicated in Fig. 1 at 14 are used. The air flow manipulating structures 14 are installed on the hub 7 between the blades 8. In other embodiments, they may alternatively or additionally be placed on the outer surface 13 and/or the nacelle housing 9. These air flow manipulating structures 14 manipulate the air flow in such a manner that greater wind velocities are obtained at components to be wind-cooled, thus enhancing the heat exchange from the outer surface 13 and the cooling structure 11.

The air flow manipulating structures 14 also generally allow for higher wind velocities closer to the nacelle surface, such that an anemometer 15 may be installed at a low height on the nacelle roof.

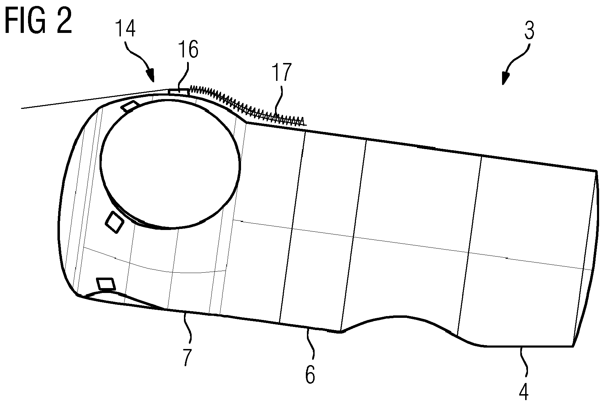

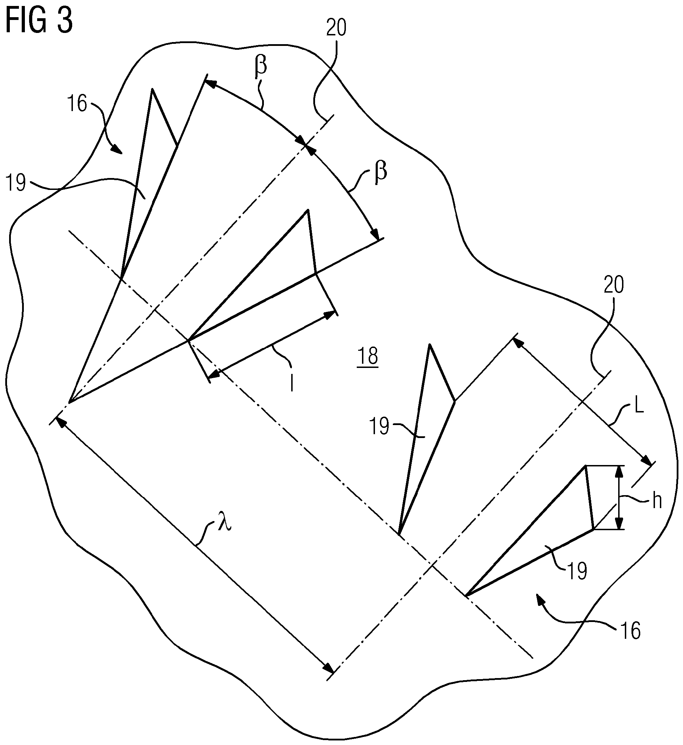

Figs. 2 and 3 show a first concrete embodiment of an air flow manipulating structure 14. Fig. 2, for the sake of simplicity, only basically shows the structural unit 3 and its components. The air flow manipulating structure 14 of this embodiment is formed as vortex generators 16 in the area of maximum diameter of the hub 7. They stir the air as indicated by line 17, enhancing the heat exchanges.

Fig. 3 shows two vortex generators 16 spaced apart on the outer surface 18 of the hub 7, arranged between to blades 8. Each vortex generator 16 comprises two triangular guiding elements 19. The guiding elements 19 are arranged symmetrical with respect to a central axis 20 and mounted outwardly oblique, drawing an angle β to the central axis 20. A non-hypotenuse side of length 1 of the right-angled triangle is mounted to the surface 18 such that the height of the guiding elements 19 increases in a hub-nacelle direction to a maximum height h. At their positions of maximum height h, the guiding elements 19 of each vortex generator 16 are spaced by a distance L. The two central axes 20 of the vortex generators 16 are distanced a predetermined distance λ.

The central axis 20 is chosen to be the likeliest wind velocity direction on the surface 18, that is, the vector sum of wind speed and tangential rotating velocity.

In concrete embodiments, 15° < β < 30°, 50mm < h < 300 mm, 1 < 1/h < 3, 1 < L/h < 3 and 3 < λ/h < 8. L and 1 can be chosen to be approximately equal, however, this is not necessary for optimal performance of the vortex generators 16.

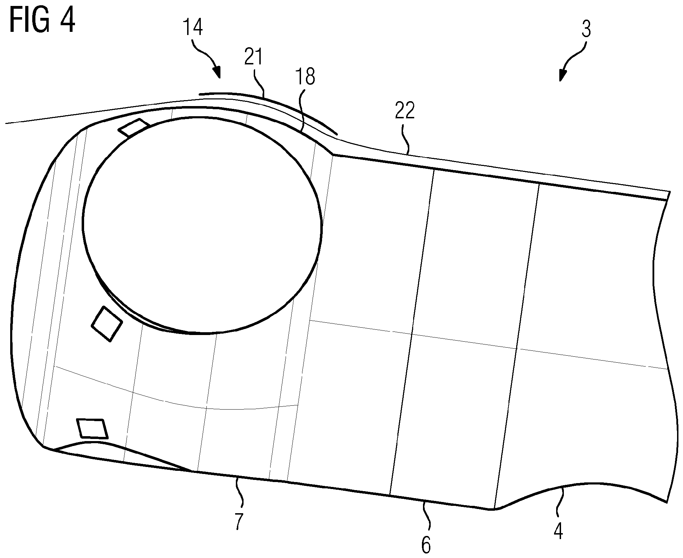

Fig. 4 shows another concrete embodiment of an air flow manipulating structure 14, here formed as a guide vane 21 installed between to blades 8. A guiding surface of the guide vane 21 follows the surface 18 of the hub 7, guiding the wind according to line 22 along the surface 18 to parts of the structural unit 3 having lower diameter or radial dimensions in general. The guide vane 21 can have a chord length of 1 to 8 m.

Although the present invention has been described in detail with reference to the preferred embodiments, the present invention is not limited by the disclosed examples from which the skilled person is able to derive other variations without departing from the scope of the invention.

## Claims

1. Wind turbine (1), comprising a tower (2) carrying a structural unit (3) with
- a hub (7) for mounting blades (8) of the wind turbine (1),
- a nacelle (4), and
- a generator for converting mechanical energy into electrical energy, housed by and/or mounted at least partly to the nacelle (4),
wherein at least one outer component of the generator constitutes a part of an outer surface of the structural unit (3) to be wind-cooled and/or a cooling structure (11) for wind-cooling extends from an outer surface of the nacelle (4),
**characterized in that** the diameter of the hub (7) at least partly exceeds the radial dimensions of the outer component and/or the nacelle (4) and at least one flow manipulating structure (14) is provided on the structural unit (3) using wind passing between the blades (8) over the hub (7) to increase the wind velocity at the outer component and/or the cooling structure (11).

2. Wind turbine according to claim 1, **characterized in that** the outer component is a rotor (6) of the generator rotationally connected to the hub (7) and comprising at least one magnet (12) to be wind-cooled by wind passing over the outer surface (13) of the outer component.

3. Wind turbine according to claim 1 or 2, **characterized in that** the flow manipulating structure (14) is placed between the blades (8) on the hub (7).

4. Wind turbine according to one of the preceding claims, **characterized in that** at least one of the at least one flow manipulating structure (14) comprises a vortex generator (16).

5. Wind turbine according to claim 4, **characterized in that** the vortex generator (16) comprises two triangular guiding elements (19), having a maximum height and a length and being arranged symmetrically with respect to a central axis (20) on the outer surface (18) of the structural unit (3), in particular the hub (7), their lengthwise edge mounted on the outer surface (18) of the structural unit (3) such that the height increases in a hub-nacelle direction and such that they are oriented oblique to the central axis (20) increasing the distance to the central axis (20) in the hub-nacelle direction, wherein the longitudinal axis of each guiding element (19) and the central axis (20) draw a predetermined angle.

6. Wind turbine according to claim 5, **characterized in that** the predetermined angle is chosen from an interval from 15° to 30° and/or the height is chosen from an interval from 50 mm to 300 mm and/or the ratio of the distance of the guiding elements (19) at their maximum height end and/or the length to their maximum height is chosen from an interval between 1 and 3.

7. Wind turbine according to one of the claims 4 to 6, **characterized in that** at least two vortex generators (16) spaced apart a predetermined distance, in particular measured between their central axes (20), are provided between two blades (8).

8. Wind turbine according to claim 7, **characterized in that** the predetermined distance, in particular measured between the central axes (20), in relation to the maximum height of the vortex generators (16), in particular of the guiding elements (19), is chosen form an interval between 3 and 8.

9. Wind turbine according to one of the preceding claims, **characterized in that** at least one of the at least one flow manipulating structure (14) comprises a guide vane (21).

10. Wind turbine according to claim 9, **characterized in that** the guide vane (21) has a guiding surface extending at least partly parallel to the outer surface (18) of the structural unit (3), in particular the hub (7), in a hub-nacelle direction.

11. Wind turbine according to claim 9 or 10, **characterized in that** the guide vane (21) has a chord length of 1 to 8 m.

12. Wind turbine according to one of the preceding claims, **characterized in that** an anemometer (15) is installed on the nacelle (4) in a region having increased wind velocity due to the flow manipulating structures (14).
